# EUROPÄISCHE PATENTSCHRIFT

(11) **EP 0 740 674 B1**
(45) Veröffentlichungstag und Bekanntmachung des Hinweises auf die Patenterteilung: **17.06.1998**
(21) Anmeldenummer: 95906314.0
(22) Anmeldetag: 07.01.1995
(51) Int. Cl.: C08G 18/08, C08G 18/42, C09D 175/06

(54) **POLYURETHANHARZE, VERFAHREN ZU IHRER HERSTELLUNG SOWIE IHRE VERWENDUNG IN WASSERVERDÜNNBAREN ÜBERZUGSMITTELN**
POLYURETHANE RESINS, PROCESS FOR PRODUCING THEM AND THEIR USE IN WATER-DILUTABLE COATING AGENTS
RESINES POLYURETHANES, LEUR PROCEDE DE PRODUCTION ET LEUR UTILISATION DANS DES AGENTS DE REVETEMENT DILUABLES DANS L'EAU

(30) Priorität: 20.01.1994 DE 4401544
(43) Veröffentlichungstag der Anmeldung: 06.11.1996
(73) Patentinhaber: BASF Coatings Aktiengesellschaft, 48165 Münster (DE)
(72) Erfinder: RINK, Heinz-Peter, D-48153 Münster (DE)
(86) Internationale Anmeldenummer: EP9500056
(87) Internationale Veröffentlichungsnummer: WO9520001

(56) Entgegenhaltungen:
- EP-A- 0 164 547
- EP-A- 0 228 003
- EP-A- 0 438 090

## Beschreibung

Gegenstand der vorliegenden Erfindung ist ein wasserverdünnbares Polyurethanharz, das erhältlich ist aus
a) mindestens einer Verbindung mit zwei Hydroxylgruppen,
b) ggf. mindestens einer, von der Verbindung (a) verschiedenen, Verbindung mit mindestens 1, bevorzugt mindestens 2, und weniger als 3 Hydroxyl- und/oder Aminogruppen,
c) mindestens einem Di- und/oder Polyisocyanat,
d) mindestens einer Verbindung, die zwei gegenüber Isocyanatgruppen reaktive Gruppen und mindestens eine zur Anionenbildung befähigte Gruppe aufweist, die vor oder nach dem Einbau der Komponente (d) in das Polyurethanmolekül neutralisiert wird, und
e) ggf. mindestens einer Verbindung mit mindestens 3 Hydroxyl- und/oder Aminogruppen,
wobei bevorzugt zunächst aus den Komponenten (a), (b), (c) und (d) ein endständige Isocyanatgruppen aufweisendes Zwischenprodukt hergestellt worden ist, dessen freie Isocyanatgruppen ggf. anschließend zumindest teilweise mit der Komponente (e) umgesetzt worden sind.

Die vorliegende Erfindung betrifft außerdem Verfahren zur Herstellung dieser Polyurethanharze, Überzugsmittel, die diese Polyurethanharze enthalten, Verfahren zur Herstellung dieser Überzugsmittel sowie Verfahren zur Herstellung eines mehrschichtigen, schützenden und/oder dekorativen Überzugs auf einer Substratoberfläche.

Aufgrund immer schärferer Umweltauflagen hat die Lackindustrie große Anstrengungen zur Reduzierung der in Überzugsmitteln eingesetzten organischen Lösemittel unternommen. Es wurden wäßrige Überzugsmittel entwickelt, die die konventionellen, ausschließlich organische Lösemittel aufweisenden Überzugsmittel zunehmend verdrängen. Zur Herstellung dieser wäßrigen überzugsmittel werden üblicherweise wasserverdünnbare, organisch gelöste Bindemittel eingesetzt. Insbesondere Polyurethanharze haben hierbei eine große Bedeutung erlangt. Aber auch bei der Herstellung dieser wasserverdünnbaren, organisch gelösten Polyurethanharzlösungen besteht die Forderung nach einem möglichst niedrigen Lösemittelgehalt und einem entsprechend hohen Festkörpergehalt der Polyurethanharzlösung. Es besteht also die Forderung nach wasserverdünnbaren, organisch gelösten Polyurethanharzen, die möglichst festkörperreich hergestellt werden können.

Aus der nicht vorveröffentlichten deutschen Patentanmeldung P 43 20 969.6 ist es beispielsweise bekannt, Polyurethanharze unter Verwendung von Ethoxiethylpropionat als Lösemittel herzustellen. Die Verwendung von Ethoxiethylpropionat bietet dabei den Vorteil, daß einerseits die Polyurethanharze strippprozeßfrei, d. h. kostengünstig, hergestellt werden können und daß weiterhin aufgrund der guten viskositätsregulierenden Eigenschaften von Ethoxiethylpropionat und der guten Beständigkeit bei erhöhten Temperaturen festkörperreiche Polyurethanharzlösungen hergestellt werden können.

Ferner sind beispielsweise aus der EP-A 438 090 Bindemittel zusammensetzungen zur Herstellung von Pigmentpasten und wäßrige überzugsmittel, die diese Pigmentpasten enthalten, bekannt. Diese aus der EP-A-438 090 bekannten Pigmentpasten enthalten 20 bis 50 Gewichtsteile eines Polyesterurethanharzes, das erhältlich ist durch Umsetzung eines Diisocyanates (A) mit einem oder mehreren Polyesterpolyolen (B), niedermolekularen Diolen (C), wobei ein Teil der niedermolekularen Diole mindestens eine zur Anionenbildung befähigte Säuregruppe aufweist, und ggf. niedermolekularen Triolen (D).

Zur Herstellung der Polyesterpolylole (B) können Diole mit sterich gehinderten primären Hydroxylgruppen, wie beispielsweise 2-Ethyl-2-butyl-1,3-propandiol u.a., eingesetzt werden, um die Hydrolysebeständigkeit zu verbessern. Der EP-A-438 090 sind jedoch keine Angaben zu entnehmen, wie möglichst festkörperreiche Polyurethanharzlösungen erhalten werden können.

Schließlich sind aus der EP-A-164 547 Finish-Mittel auf der Basis wäßriger Polyurethanharz-Dispersionen sowie die Verwendung dieser Mittel zur Herstellung von Schlußstrichen oder Finishen auf flexiblen Substraten, vorzugsweise auf PVC, bekannt.

Der vorliegenden Erfindung liegt somit die Aufgabe zugrunde, wasserverdünnbare Polyurethanharze zur Verfügung zu stellen, die gegenüber dem Stand der Technik verbesserte Eigenschaften aufweisen. Vor allem sollten die Polyurethanharze zu wäßrigen Überzugsmitteln führen, die beim Einsatz in Basecoat/Clearcoat-Verfahren verbesserte Mehrschichtlackierungen liefern. Insbesondere sollten die wasserverdünnbaren Polyurethanharzlösungen möglichst festkörperreich herstellbar sein und die Herstellung von wäßrigen Überzugsmitteln mit einem möglichst niedrigen Gehalt an organischen Lösemitteln ermöglichen.

Diese Aufgabe wird überraschenderweise durch die Polyurethanharze der eingangs genannten Art gelöst, die dadurch gekennzeichnet sind, daß als Komponente (a)
a₁) mindestens ein Diol der Formel (I) 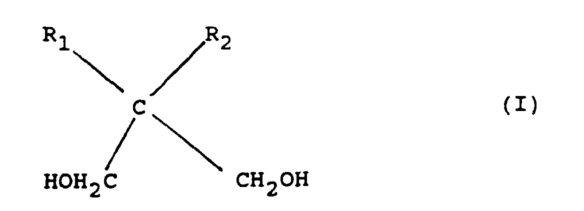 in der R₁ und R₂ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R₁ und/oder R₂ nicht Methyl sein darf, und/oder
a₂) mindestens ein Diol der Formel (II) 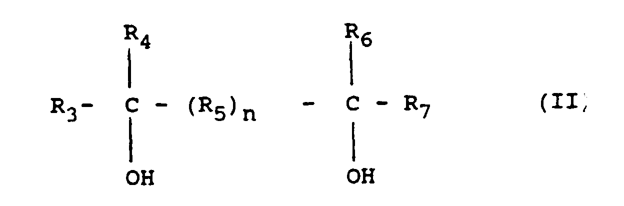 in der R₃, R₄, R₆ und R₇ jeweils gleiche oder verschiedene Reste darstellen und für einen Alkylrest mit 1 bis 6 C-Atomen, einen Cycloalkylrest oder einen Arylrest stehen und R₅ einen Alkylrest mit 1 bis 6 C-Atomen, einen Arylrest oder einen ungesättigten Alkylrest mit 1 bis 6 C-Atomen darstellt, und n entweder 0 oder 1 ist,
eingesetzt wird.

Gegenstand der vorliegenden Erfindung ist außerdem ein Verfahren zur Herstellung der Polyurethanharze. Ferner betrifft die vorliegende Erfindung Überzugsmittel, die diese Polyurethanharze enthalten, Verfahren zur Herstellung dieser Überzugsmittel sowie die Verwendung der Überzugsmittel in Verfahren zum Beschichten von Substraten.

Es ist überraschend und war nicht vorhersehbar, daß gerade der Einsatz der Diole der Formeln (I) und (II) die Herstellung von Polyurethanharzlösungen mit einem hohen Festkörpergehalt bei gleichzeitig niedriger Viskosität ermöglicht. Vorteilhaft ist ferner, daß die unter Verwendung dieser Polyurethanharze hergestellten wäßrigen Überzugsmittel gute mechanische Eigenschaften (wie z.B. Haftung und metallischer Effekt) aufweisen, die mit den Eigenschaften von Beschichtungen vergleichbar oder sogar besser sind, die unter Verwendung herkömmlich hergestellter Polyurethandispersionen erhalten wurden.

Im folgenden werden nun zunächst die einzelnen Komponenten zur Herstellung der erfindungsgemäßen Polyurethanharze näher beschrieben.

Die zur Herstellung der Polyurethanharzlösungen bzw. Polyurethandispersionen geeigneten Ausgangsstoffe, ausgenommen (a₁) und (a₂), wie z.B. Polyole, Isocyanate, Kettenverlängerungsmittel, reaktive, zur Salzbildung befähigte Komponenten sowie weitere Hilfsstoffe, sind im wesentlichen bekannt, und beispielsweise in den folgenden Schriften beschrieben:

DE-OS 26 24 442, DE-OS 32 10 051, EP-A 355 433, DE-OS 35 45 618, DE-OS 38 13 866, DE-OS 40 05 961 , DE-OS 41 10 520 und DE-OS 40 13 546. Wegen Beispielen für geeignete Aufbaukomponenten der Polyurethanharze sei daher auf diese Schriften verwiesen.

Es ist erfindungswesentlich, daß als Diolkomponente (a) zur Herstellung der Polyurethanharze
a₁) mindestens ein Diol der Formel (I) 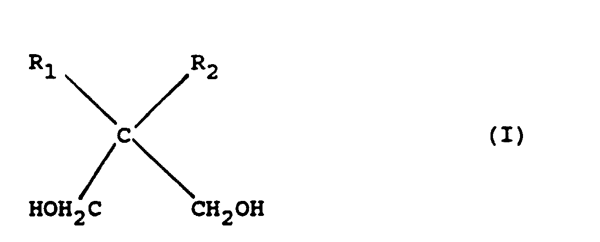 in der R₁ und R₂ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R₁ und/oder R₂ nicht Methyl sein darf, und/oder
a₂) mindestens ein Diol der Formel (II) 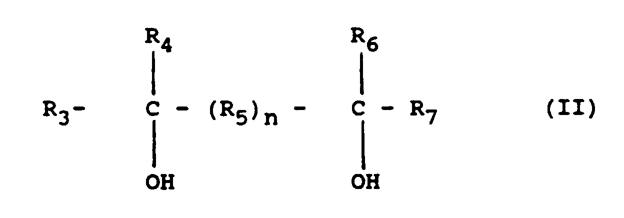 in der R₃, R₄, R₆ und R₇ jeweils gleiche oder verschiedene Reste darstellen und R₃, R₄, R₆ und R₇ für einen Alkylrest mit 1 bis 6 C-Atomen, einen Cycloalkylrest oder einen Arylrest stehen und R₅ einen Alkylrest mit 1 bis 6 C-Atomen, einen Arylrest oder ungesättigten Alkylrest mit 1 bis 6 C-Atomen darstellt, und n entweder O oder 1 ist.

Als Komponente (a₁) sind alle Propandiole der Formel (I) geeignet, bei denen entweder R₁ oder R₂ oder R₁ und R₂ nicht gleich Methyl ist, wie beispielsweise 2-Butyl-2-ethylpropandiol-1,3, 2-Phenyl-2-methylpropandiol-1,3, 2-Propyl-2-ethylpropandiol-1,3, 2-Di-tert.-butylpropandiol-1,3, 2-Butyl-2-propylpropandiol-1,3, 1-Dihydroximethyl-bicyclo[2.2.1]heptan, 2,2-Diethylpropandiol-1,3, 2,2-Dipropylpropandiol-1,3, 2-Cyclohexyl-2-methylpropandiol-1,3 und andere.

Als Komponente (a₂) können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxipropyl)-benzol und 1,3-(2'-Hydroxipropyl)-benzol eingesetzt werden.

Bevorzugt werden als Komponente (a₁) 2-Propyl-2-ethylpropandiol-1,3, 2,2-Diethylpropandiol-1,3, 2-Butyl-2-ethylpropandiol-1,3 und 2-Phenyl-2-ethylpropandiol-1,3 und als Komponente (a₂) 2,3-Dimethylbutandiol-2,3 sowie 2,5-Dimethylhexandiol-2,5 eingesetzt. Besonders bevorzugt werden als Komponente (a₁) 2-Butyl-2-ethylpropandiol-1,3 sowie 2-Phenyl-2-ethylpropandiol-1,3 und als Komponente (a₂) 2,5-Dimethylhexandiol-2,5 eingesetzt.
Die Komponenten (a₁) und/oder (a₂) werden üblicherweise in einer Menge von 0,5 bis 15 Gew.-%, bevorzugt 1 bis 7 Gew.-% eingesetzt, wobei die Summe der Gewichtsanteile der Komponenten (a), (b), (d) und (e) jeweils 100 Gew.-% beträgt.

Zur Herstellung der erfindungsgemäßen Polyurethane können zusammen mit der Komponente (a₁) und/oder (a₂) noch weitere Verbindungen, die mindestens eine, bevorzugt mindestens zwei, und weniger als 3 Hydroxyl- und/oder Aminogruppen enthalten, eingesetzt werden (Komponente (b)). Die als Komponente (b) eingesetzten Verbindungen können niedermolekular und/oder hochmolekular sein. Die Komponente (b) wird üblicherweise in einer Menge von 50 bis 97 Gew.-%, bevorzugt 75 bis 89 Gew.-%, eingesetzt, wobei die Summe der Gewichtsanteile der Komponenten (a), (b), (d) und (e) jeweils 100 Gew.-% beträgt.

Um die Härte des Polyurethans zu erhöhen, kann man als Komponente (b) noch weitere niedermolekulare Polyole, insbesondere Diole, einsetzen. Sie haben ein Molekulargewicht von 60 bis zu etwa 400 und können aliphatische, alicyclische oder aromatische Gruppen enthalten.

Beispiele für geeignete niedermolekulare Polyole (b) sind 2,2-Dimethylpropandiol-1,3, Hexandiole, Butandiole, 1,4-Hydroximethylcyclohexan und Hydroxipivalinsäureneopentylglyolester.

Um ein Polyurethanharz hoher Flexibilität zu erhalten, sollte ein hoher Anteil der Komponente (b) aus einem überwiegend linearen höhermolekularen Polyol mit einer bevorzugten OH-Zahl von 30 bis 150 mg KOH/g eingesetzt werden. Bevorzugt bestehen 50 bis 100 Gew.-%, besonders bevorzugt 75 bis 90 Gew.-% der gesamten Komponente (b) aus gesättigten und ungesättigten Polyestern und/oder Polyethern mit einem zahlenmittleren Molekulargewicht Mₙ von 400 bis 5000. Bevorzugt werden dabei als Komponente (b) Polyesterpolyole und/oder Polyetherpolyole eingesetzt, die als 60 %ige Lösung im Ethoxiethylpropionat bei 23 °C eine Viskosität von 1,5 dPa.s bis 5,0 dPa.s, bevorzugt 2,5 bis 4,0 dPa.s, aufweisen (üblicherweise gemessen mit dem ICI-Platte-Kegel Viskosimeter). Außerdem ist es bevorzugt, Polyesterpolyole und/oder Polyetherpolyole als Komponente (b) einzusetzen, die eine Glasübergangstemperatur von mindestens - 40 °C, bevorzugt von - 25°C bis + 15°C, aufweisen.

Insbesondere werden als Komponente (b) bevorzugt lineare Polyesterdiole und besonders bevorzugt lineare Polyesterdiole mit einer Viskosität bei 23 °C von 1,5 bis 5,0 dPa.s, bevorzugt 2,5 bis 4,0 dPa.s (60%ige Lösung im Ethoxiethylpropionat) und/oder mit einer Glasübergangstemperatur von mindestens - 40°C, bevorzugt von - 25°C bis + 15°C, eingesetzt.

Die als Komponente (b) ausgewählten Polyetherdiole bzw. Polyetherpolyole sollten keine übermäßigen Mengen an Ethergruppen einbringen, weil sonst die gebildeten Polymeren in Wasser anquellen.

Die Polyesterdiole (b) werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden.

Als Beispiel für als Komponente (b) geeignete Polyetherpolyole seien Polyoxialkylenpolyole, insbesondere Polyoxipropylenglykole mit einem zahlenmittleren Molekulargewicht von 300 bis 3000 genannt.

Es können als Komponente (b) auch Polyesterpolyole eingesetzt werden, deren Säurekomponente zumindest zum Teil aus dimeren Fettsäuren besteht. Derartige Systeme sind beispielsweise in der US-PS-4,423,179 beschrieben.

Außer den aufgeführen Diolen sind zur Herstellung des Polyurethanharzes als Komponente (b) auch aminogruppenhaltige Verbindungen geeignet, bevorzugt werden jedoch die aufgeführten Diole eingesetzt.

Als typische multifunktionelle Isocyanate (Komponente (c)) werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten eingesetzt. Die zur Bildung des Polyurethans gebrauchte Polyisocyanatkomponente (c) kann auch einen Anteil höherwertiger Polyisocyanate enthalten, vorausgesetzt, dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenen Verbindungen entstehen. Die mittlere Funktionalität kann ggf. durch Zusatz von Monoisocyanaten gesenkt werden.

Zur Herstellung festkörperreicher Polyurethanharzlösungen werden insbesondere Diisocyanate der allgemeinen Formel (III) 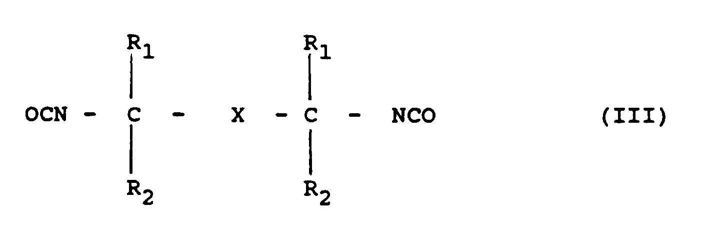 eingesetzt, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 - 4 C-Atomen, bevorzugt für einen Methylrest, stehen. Diisocyanate der Formel (III) sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cynamid Company unter dem Handelsnamen TMXDI (META)® verkauft).

Es ist bevorzugt, als Komponente (c) ausschließlich ein Diisocyanat der Formel (III) oder ein Gemisch aus solchen Diisocyanaten einzusetzen. Es ist besonders bevorzugt, als Komponente (c) ein Diisocyanat der Formel (IV) 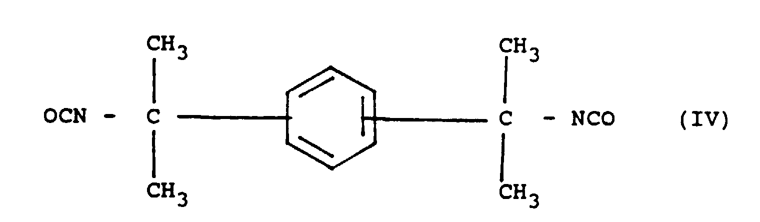 einzusetzen. Diese Isocyanate werden auch als Tetramethylxylylendiisocyanate (TMXDI) bezeichnet. Als Komponente (c) wird ganz besonders bevorzugt ein Diisocyanat der Formel (IV) eingesetzt, bei dem die -C(CH3)₂NCO-Gruppen in Metastellung stehen (MTMXDI).

Zusätzlich zu den Diisocyanaten der Formel (III) oder stattdessen können auch noch andere aliphatische und/oder cycloaliphatische und/oder aromatische Polyisocyanate eingesetzt werden. Als Beispiele für zusätzlich einsetzbare Polyisocyanate werden 1,3- und 1,4-Phenylendiisocyanat, 2,4- und 2,6-Toluylendiisocyanat, Xylylendiisocyanat, 4,4'-Bisphenylendiisocyanat, 1,4- und 1,5-Naphthylendiisocyanat, Diphenylmethandiisocyanat, Isophorondiisocyanat, Cyclopentylendiisocyanat, Cyclohexylendiisocyanat, Methylcyclohexylendiisocyanat, Dicyclohexylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewähreistet (Trägergruppen). Geeignete Trägergruppen sind nichtionische Gruppen (z.B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die zwei mit Isocyanatgruppen reagierende H-aktive Gruppen und mindestens eine zur Anionenbildung befähigte Gruppe enthalten (Komponente (d)). Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den anderen gegenüber Isocyanatgruppen reaktiven Gruppen des Moleküls reagieren. Es werden dazu Alkansäuren mit 2 Substituenten am α-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben 2 bis etwa 25, vorzugsweise 3 bis 10 Kohlenstoffatome. Das carboxylgruppenenthaltende und/oder andere, anionenbildende Gruppen enthaltende Polyol (d) kann 2 bis 20 Gew.-%, vorzugsweise 5 bis 15 Gew.-%, des gesamten Polyol-Bestandteils ((a) + (b) + (d) + (e)) im Polyurethanharz ausmachen.

Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 6 Gew.-%. Die Menge an Dihydroxialkansäuren im unneutralisierten Präpolymer ergibt eine Säurezahl von wenigstens 5, vorzugsweise wenigstens 10. Bei sehr niedrigen Säurezahlen sind im allgemeinen weitere Maßnahmen zur Erzielung der Wasserdispergierbarkeit erforderlich.
Die obere Grenze der Säurezahl liegt bei 70, vorzugsweise bei 40 mg KOH/g, bezogen auf den Feststoff. Bevorzugt liegt die Säurezahl im Bereich von 20 bis 30 mg KOH/g.

Als Verbindung (d), die mindestens 2 mit Isocyanatgruppen reagierende Gruppen und mindestens eine zur Anionenbildung befähigte Gruppe enthält, sind beispielsweise Dihydroxipropionsäure, Dimethylolpropionsäure, Dihydroxibernsteinsäure oder Dihydroxibenzoesäure geeignet. Geeignet sind auch die durch Oxidation von Monosacharin zugänglichen Polyhydroxisäuren, zum Beispiel Glykolsäure, Zuckersäure, Schleimsäure, Glykuronsäure und dergleichen.

Aminogruppenhaltige Verbindungen sind beispielsweise α,δ-Diaminovaleriansäure, 3,4-Diaminobenzoesäure, 2,4-Diamino-toluolsulfonsäure-5, 4,4'-Diamino-di-phenylethersulfonsäure und dergleichen.

Geeignete tertiäre Amine zur Neutralisation der anionischen Gruppen sind beispielsweise Trimethylamin, Triethylamin, Dimethylanilin, Diethylanilin, Triphenylamin, Dimethylethanolamin und dergleichen. Erfolgt die Neutralisation in organischer Phase, wird bevorzugt Triethylamin eingesetzt, bei der Neutralisation in wäßriger Phase bevorzugt Dimethylethanolamin.

Bevorzugt werden die Komponenten (a), (b), (c) und (d) zunächst zu einem endständige Isocyanatgruppen aufweisenden Zwischenprodukt umgesetzt.

In einer zweiten Stufe werden die noch vorhandenen Isocyanatgruppen des Präpolymers mit einem Modifizierungsmittel (e) umgesetzt. Diese Reaktion führt insbesondere zu einer weiteren Verknüpfung und Erhöhung des Molekulargewichts. Die Menge dieses Modifizierungsmittels wird durch seine Funktionalität und den NCO-Gehalt des Präpolymeren bestimmt. Das Äquivalentverhältnis der aktiven Wasserstoffatome im Modifizierungsmittel zu den NCO-Gruppen im Präpolymer sollte in der Regel geringer als 4:1 sein und vorzugsweise im Bereich zwischen 3:1 und 2:1 liegen.

Bevorzugt werden als Modifizierungsmittel (e) für die Umsetzung mit dem Präpolymer Tri- und/oder Polyole eingesetzt.

Es können aber auch andere Verbindungen mit aktiven Wasserstoffatomen als Modifizierungsmittel eingesetzt werden, beispielsweise Polyamine, allerdings nur unter der Voraussetzung, daß die Umsetzung des Präpolymers mit dem Modifizierungsmittel in einem organischen Lösemittel durchführbar (kontrollierbar) ist und bei dieser Reaktion keine unerwünschten Reaktionen, wie zum Beispiel die beim Einsatz von Polyaminen häufig beobachtete Gelierung an der Eintropfstelle des Amins, auftreten.

Als Beispiel für mindestens 3 Hydroxylgruppen enthaltende Polyole seien Trimethylolpropan, Glycerin, Diglycerin, Erythrit, Mesoerythrit, Arabit, Adonit, 1,2,4-Butantriol u.s.w. genannt. Bevorzugt wird Trimethylolpropan eingesetzt. Die Umsetzung des Präpolymers mit dem Tri- und/oder Polyol wird vorzugsweise durch die Stöchiometrie der eingesetzten Verbindungen so gesteuert, daß es zur Kettenverlängerung kommt. Die Komponente (e) wird üblicherweise in einer Menge von 0 bis 15 Gew.-%, bevorzugt 5 bis 10 Gew.-%, bezogen auf das Gesamtgewicht der Komponenten (a), (b), (d) und (e), eingesetzt.
Die erfindungsgemäßen Polyurethanharze weisen üblicherweise ein zahlenmittleres Molekulargewicht von 1.000 bis 30.000, bevorzugt 1.500 bis 20.000 (bestimmt jeweils gelpermeationschromatographisch mit Polystyrol als Standard), sowie eine Säurezahl von 5 bis 70 mg KOH/g, bevorzugt 10 bis 30 mg KOH/g, auf.

Zur Herstellung des erfindungsgemäßen Polyurethanharzes wird bevorzugt zunächst ein isocyanatgruppenaufweisendes Präpolymer hergestellt, aus dem dann durch weitere Umsetzung, bevorzugt Kettenverlängerung, das gewünschte Polyurethanharz hergestellt wird. Die Umsetzung der Komponenten (a), (b), (c) und (d) erfolgt dabei nach den gut bekannten Verfahren der organischen Chemie (vgl. z.B. Kunststoff-Handbuch, Band 7: Polyurethane, herausgegeben von Dr. Y. Oertel, Karl-Hanser-Verlag, München, Wien 1983), wobei bevorzugt eine stufenweise Umsetzung der Komponenten (z.B. Bildung eines ersten Zwischenproduktes aus den Komponenten (a), (b) und (c), das dann mit (d) zu einem zweiten Zwischenprodukt umgesetzt wird) durchgeführt wird. Es ist aber auch eine gleichzeitige Umsetzung der Komponenten (a), (b), (c) und (d) möglich. Beispiele für die Herstellung der Präpolymeren sind in der DE-OS 26 24 442 und der DE-OS 32 10 051 beschrieben. Daneben ist zur Herstellung der Polyurethanharze aber auch eine gleichzeitige Umsetzung der Komponenten (a), (b), (c), (d) und (e) möglich.

Die Reaktionstemperatur bei der Herstellung des Präpolymers aus den Komponenten (a), (b), (c) und (d) beträgt üblicherweise bis zu 150°C, bevorzugt zwischen 80 und 150°C, besonders bevorzugt 100 bis 120°C. Höhere Reaktionstemperaturen von 100 bis 120°C führen dabei zur Reaktionszeitverkürzung und sind außerdem bei der Herstellung festkörperreicher Polyurethanharzlösungen erwünscht, da so eine leichtere Handhabbarkeit der Harzlösungen (Viskositätserniedrigung) gegeben ist. Die Herstellung der Polyurethanharze kann nach den bekannten Verfahren erfolgen (z.B. Acetonverfahren u.ä.).

Die Umsetzung der Komponenten (a), (b), (c) und (d) erfolgt aber bevorzugt in Ethoxiethylpropionat (EEP) als Lösemittel. Die Menge an Ethoxiethylpropionat kann dabei in weiten Grenzen variieren und sollte zur Bildung einer Präpolymerlösung mit geeigneter Viskosität ausreichen. Im allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 - 15 Gew.-% EEP, bezogen auf den Festkörper, durchgeführt werden.
Die Umsetzung der Komponenten (a), (b), (c) und (d) kann gegebenenfalls in Gegenwart eines Katalysators, wie Organozinnverbindungen und/oder tertiären Aminen, erfolgen.
Zur Herstellung der Präpolymeren werden die Mengen der Komponenten (a), (b), (c) und (d) so gewählt, daß das Äquivalentverhältnis von NCO- zu OH-Gruppen zwischen 2,0 : 1,0 und > 1,0 : 1,0, bevorzugt zwischen 1,4 : 1 und 1,1 : 1, liegt.
Das NCO-Präpolymer enthält wenigstens etwa 0,5 Gew.-% Isocyanatgruppen, vorzugsweise wenigstens 1 Gew.-% NCO, bezogen auf den Feststoff. Die obere Grenze liegt bei etwa 15 Gew.-%, vorzugsweise 10 Gew.-%, besonders bevorzugt bei 5 Gew.-% NCO.

Die erfindungsgemäßen Polyurethanharze können nach ihrer Herstellung ggf. noch weiter verdünnt werden. Hierfür geeignete Lösemittel sind z.B. Butoxipropanol, Methoxibutanol, Propylenglykolmonopropylether, Propylenglykolmonoisopropylether, Methyldiglykol und Propylenglykol-mono-tert.-butylether. Die Auswahl dieser Lösemittel richtet sich nach den gewünschten Eigenschaften der Überzugsmittel.

Die nach dem erfindungsgemäßen Verfahren hergestellten und ggf. weiter verdünnten Polyurethanharzlösungen können direkt zur Herstellung der Basisfarben eines Mischsystems eingesetzt werden. In diesem Fall werden in die erhaltenen Polyurethanharzlösungen - wie in der DE-OS 41 10 520 beschrieben - nach dem Fachmann bekannten Methoden durch Mischen und gegebenenfalls Dispergieren die weiteren Bestandteile der Basisfarben, wie zum Beispiel Pigmente, übliche Hilfs- und Zusatzstoffe sowie gegebenenfalls andere, zusätzliche Bindemittel u.ä., eingearbeitet.

Zur Herstellung von wasserverdünnbaren Überzugsmitteln unter Verwendung des Mischsystems werden dann kurz vor der Applikation des Überzugsmittels die für den gewünschten Farbton benötigten wasserfreien Basisfarben sowie mindestens eine wasserenthaltende, pigmentfreie Komponente gemischt.

Die erfindungsgemäßen Polyurethanharzlösungen eignen sich außerdem zur Herstellung wäßriger Überzugsmittel. In diesem Fall wird die Polyurethanharzlösung in eine wäßrige Phase überführt, indem die Lösung nach dem Fachmann gut bekannten Methoden in Wasser dispergiert wird.
Bei Verwendung von Ethoxiethylpropionat als Lösemittel zur Herstellung der Polyurethanharze ist es im Gegensatz zu den nach herkömmlichen Verfahren hergestellten Polyurethanharzlösungen nicht erforderlich, das als Lösemittel verwendete Ethoxiethylpropionat abzudestillieren. Das Ethoxiethylpropionat kann vielmehr im Überzugsmittel verbleiben.

Gegebenenfalls kann es vorteilhaft sein, dem erhaltenen wäßrigen Überzugsmittel noch weitere Cosolventien zuzusetzen. Hierzu eignet sich insbesondere Butoxipropanol, da mit Butoxipropanol als Cosolvens hervorragende Applikationsergebnisse sowie hervorragende optische und mechanische Eigenschaften der resultierenden Beschichtung erzielt werden. Daneben sind - je nach Einsatzzweck und Anforderungsprofil der Überzugsmittel - auch noch andere Lösemittel als Cosolventien geeignet, wie zum Beispiel 3-Methoxibutanol, Propylenglykolmonopropylether, Propylenglykolmono-tert.-butylether, Propylenglykolmonoisopropylether und Butylglykol.

Zur Herstellung wäßriger Überzugsmittel ist es aber auch möglich, die Polyurethanharze zunächst mit den obengenannten Cosolventien weiter zu verdünnen und diese verdünnten Polyurethanharzlösungen dann nach dem Fachmann gut bekannten Methoden in Wasser zu dispergieren. Je nach gewählten Cosolventien ist so die Dispergierung in Wasser ggf. leichter möglich.

Die Herstellung der wäßrigen Überzugsmittel aus den erfindungsgemäß hergestellten Polyurethandispersionen durch Einarbeiten der übrigen Bestandteile, wie zum Beispiel Pigmente, Hilfs- und Zusatzstoffe, weitere Bindemittel u.ä., erfolgt nach gut bekannten, üblichen Methoden und braucht daher nicht näher erläutert zu werden.

Üblicherweise beträgt die Einsatzmenge anderer, zusätzlicher Bindemittel zwischen 0 und 8 Gew.-%, die der Pigmente zwischen 1 und 6 Gew.-% sowie die der üblichen Hilfs- und Zusatzstoffe zwischen 0 und 5 Gew.-%, jeweils bezogen auf das Gesamtgewicht des Beschichtungsmittels und den jeweiligen Festkörper.

Die erfindungsgemäßen Polyurethandispersionen eignen sich insbesondere für den Einsatz in Beschichtungsmitteln, die zur Herstellung mehrschichtiger Überzüge verwendet werden.

Gegenstand der vorliegenden Erfindung ist daher auch ein Verfahren zur Herstellung eines mehrschichtigen, schützenden und/oder dekorativen Überzuges auf einer Substratoberfläche, bei dem
1.) eine Basislackbeschichtungszusammensetzung aufgebracht wird,
2.) aus der in Stufe (1) aufgebrachten Zusammensetzung ein Polymerfilm auf der Oberfläche gebildet wird,
3.) auf der so erhaltenen Basisschicht ein transparenter Decklack aufgebracht wird und
4.) die Deckschicht zusammen mit der Basisschicht gehärtet wird.

Das Verfahren ist dadurch gekennzeichnet, daß die in Stufe (1) aufgebrachte Basislackbeschichtungszusammensetzung und/oder der in Stufe (3) aufgebrachte Decklack ein erfindungsgemäßes Polyurethanharz enthält.

Die erfindungsgemäßen wäßrigen Polyurethandispersionen eignen sich ferner insbesondere für die Herstellung wäßriger überzugsmittel für die Beschichtung von Automobilkarossen (Serienlackierung) und/oder Kunststoffteilen. Sie können aber auch auf anderen Substraten, z.B. Glas, Metallen, Holz u.ä. appliziert werden. Ferner werden sie bevorzugt für die Herstellung von wasserverdünnbaren Reparaturlacken, insbesondere im Bereich der Autoreparaturlackierung, eingesetzt. Insbesondere sind sie gut für die Herstellung von wäßrigen Basislacken für die Reparaturlackierung von Automobilen geeignet. Daneben finden die erfindungsgemäß hergestellten Polyurethandispersionen aber auch noch vielfältige, andere Anwendungsgebiete, angefangen bei Klebstoffen über Lederfinishmassen bis hin zu Überzugsmitteln für die unterschiedlichsten Anwendungsgebiete, zum Beispiel Füller oder Überzugsmittel für Industriegüter, Großmaschinen u.a..

Die Härtung der erfindungsgemäßen Beschichtungsmittel erfolgt üblicherweise bei Temperaturen von 60 bis 130°C, bevorzugt 60 bis 80°C.

Die Erfindung wird nun anhand von Beispielen näher erläutert. Alle Angaben über Teile und Prozente sind dabei Gewichtsangaben, falls nicht ausdrücklich etwas anderes festgestellt wird.

### Polyesterdiol A

In einer für die Polyestersynthese üblichen Apparatur wurden 371,2 g Pripol 1013 (handelsübliche Dimerfettsäure mit einem Monomerengehalt von maximal 0,1 %, einem Trimerengehalt von maximal 2 %, einer Säurezahl von 195 bis 198 mg KOH/g und einer Verseifungszahl von 198 - 202 mg KOH/g), 107,7 g Cyclohexandimethanol, 723,3 g Hydroxipivalinsäureneopentylglykolester, 17,2 g Ethylbutylpropandiol, 392,6 g Neopentylglykol und 1018,7 g Isophthalsäure mit Cyclohexan als Schleppmittel und 0,25 g Monobutylzinnoxidhydrat bis zu einer Säurezahl < 5,0 umgesetzt. Das Cyclohexan wurde abdestilliert und der Polyester bis zu einer Säurezahl von < 1,5 gefahren. Der Ansatz wurde auf etwa 100°C abgekühlt und mit Methylethylketon auf 75,7 % angelöst. Das Polyesterdiol A weist ein Mₙ von 2352 (gemessen mit GPC gegen Polystyrol-Standard) und eine Glasübergangstemperatur (gemessen mit DSC-Differential Scanning Calorimetry) von - 16 °C auf. Die Viskosität einer 60%igen Lösung in Ethoxiethylproponat beträgt bei 23 °C 3,5 dPa.s.

### Polyesterdiol B

In einer für die Polyestersynthese üblichen Apparatur wurden 371,2 g Pripol 1013, 107,7 g Cyclohexandimethanol, 723,3 g Hydroxipivalinsäureneopentylglykolester, 17,2 g Ethylbutylpropandiol, 392,6 g Neopentylglykol und 1018,7 g Isophthalsäure mit Cyclohexan als Schleppmittel und 0,25 g Monobutylzinnoxidhydrat bis zu einer Säurezahl < 5,0 umgesetzt. Das Cyclohexan wurde abdestilliert und der Polyester bis zu einer Säurezahl von < 1,5 gefahren. Der Ansatz wurde auf etwa 100°C abgekühlt und mit Ethoxiethylpropionat auf 79,5 % angelöst. Das Polyesterdiol B weist ein Mₙ von 2352 (gemessen mit GPC gegen Polystyrol-Standard) und eine Glasünergangstemperatur (gemessen mit DSC) von - 16 °C auf. Die Viskosität einer 60 %igen Lösung in Ethoxiethylpropionent beträgt bei 23 °C 3,5 dPa.s.

### Beispiel 1: Herstellung des Polyurethanharzes 1

In einem 5 1 Reaktionsgefäß mit Rührer, Rückflußkühler wurde eine Mischung aus 971,7 g des Polyesterdiols A, 13,5 g 2-Butyl-2-ethylpropandiol-1,3, 60,8 g Dimethylolpropionsäure und 307,1 g Tetramethylxylylendiisocyanat und 137,1 g Methylethylketon auf eine Reaktionstemperatur von 80 - 85°C erhitzt, bis ein konstanter NCO-Wert des Gemisches erreicht war. Anschließend gab man pro Mol Diisocyanatpräpolymer die 2,4-fache Menge an Molen Trimethylolpropan hinzu und ließ abreagieren, bis der Isocyanatgehalt praktisch Null war. Das Gemisch wurde mit 370 g Butylglykol versetzt und mittels Strippprozeß das Methylethylketon weitestgehend entfernt (Brechungsindex des Destillates < 1.340). Anschließend wurde mit 30,3 g N,N-Dimethylethanolamin neutralisiert. Den Festkörper des Gemisches stellte man mit Butylglykol auf 60 % ein. Die Säurezahl des Harzes betrug 20,9 mg KOH/g und die Viskosität (10:3 in N-Methylpyrollidon) 11,5 dPa.s (ICI Platte/Kegel-Viskosimeter, 23°C).

### Vergleichsbeispiel 1: Herstellung des Polyurethanharzes V1

Es wurde analog Beispiel 1 ein Polyurethanharz V1 hergestellt mit dem einzigen Unterschied, daß statt 13,5 g 2-Butyl-2-ethylpropandiol-1,3 nun 8,8 g Neopentylglykol eingesetzt wurden.
Die Säurezahl des Polyurethanharzes V1 beträgt 21,0 mgKOH/g. Die Viskosität (10 : 3 der mit N-Methylpyrrolidon verdünnten und mit Butylglykol auf 60 % Festkörper eingestellten Polyurethanharzlösung V1) beträgt 13,5 dPa.s, gemessen bei 23°C mit dem ICI-Platte-Kegel-Viskosimeter.

### Beispiel 2: Herstellung des Polyurethanharzes 2

In einem 5 l Reaktionsgefäß mit Rührer, Rückflußkühler wurde eine Mischung aus 728,9 g des Polyesterdiols B, 10,9 g 2-Butyl-2-ethylpropandiol-1,3, 47,9 g Dimethylolpropionsäure und 241,9 g Tetramethylxylylendiisocyanat auf eine Reaktionstemperatur von 115°C erhitzt, bis ein konstanter NCO-Wert des Gemisches erreicht war. Anschließend gab man pro Mol Diisocyanat die 2,2-fache Menge an Molen Trimethylolpropan hinzu und ließ abreagieren, bis der Isocyanatgehalt praktisch Null war. Das Gemisch wurde mit 500 g Butoxipropanol angelöst und auf einmal mit 23,9 g Dimethylethanolamin bei einer Temperatur von 100°C versetzt. Abschließend stellte man einen Festkörper von 60 % mit Butoxipropanol ein. Das Bindemittel weist eine Säurezahl von 20,6 mg KOH/g und eine Viskosität (10:3 in N-Methylpyrrolidon) von 13,5 dPa.s auf.

### Beispiel 3: Herstellung des Polyurethanharzes 3

Es wurde analog Beispiel 2 ein Polyurethanharz 3 hergestellt mit dem einzigen Unterschied, daß statt 10,9 g 2-Butyl-2-ethylpropandiol-1,3 nun 9,7 g 2,5-Dimethylhexandiol-2,5 eingesetzt wurden.
Das Polyurethanharz 3 weist eine Säurezahl von 21,5 mg KOH/g und eine Viskosität (10:3 in N-Methylpyrrolidon) von 14,5 dPa.s auf.

### Beispiel 4: Herstellung des Polyurethanharzes 4

In einem 5 1 Reaktionsgefäß mit Rührer und Rückflußkühler wurde eine Mischung aus 728,9 g des Polyesterdiols B, 11,0 g 2-Phenyl-2-Methyl-propandiol-1,3, 47,9 g Dimethylolpropionsäure und 241,9 g Tetramethylxylylendiisocyanat auf eine Reaktionstemperatur von 115°C erhitzt, bis ein konstanter NCO-Wert des Gemisches erreicht war.
Anschließend gab man pro Mol Diisocyanat die 2,2-fache Menge an Molen Trimethylolpropan hinzu und ließ abreagieren, bis der Isocyanatgehalt praktisch Null war. Das Gemisch wurde mit 500 g Butoxipropanol angelöst und auf einmal mit 23,9 g Dimethylethanolamin bei einer Temperatur von 100°C versetzt. Abschließend stellte man einen Festkörper von 60 % mit Butoxipropanol ein. Das Bindemittel wies eine Säurezahl von 21,2 mg KOH/g und eine Viskosität (10 : 3 in N-Methylpyrrolidon) von 13,5 dPa.s auf.

### Beispiel 5: Herstellung einer Polyurethanharzdispersion

In einem 5 1 Reaktionsgefäß mit Rührer und Rückflußkühler wird eine Mischung aus 895,5 Teilen des Polyesterdiols B, 4,4 Teilen Neopentylglykol, 64,0 Teilen Dimethylolpropionsäure und 268,5 Teilen Tetramethylxylylendiisocyanat auf eine Reaktionstemperatur von 115°C erhitzt, bis ein konstanter NCO-Wert des Gemisches erreicht ist. Anschließend gibt man auf pro Mol Diisocyanat die 1,88-fache Menge an Molen Trimethylolpropan hinzu und läßt abreagieren, bis der Isocyanatgehalt praktisch Null ist. Nach der Zugabe von 38,2 Teilen N,N-Dimethylethanolamin bei 110°C wird eine halbe Stunde gerührt. Danach wird bei 80°C deionisiertes Wasser zugegeben und ein Festkörper von 35,8 % eingestellt. Der pH-Wert der Dispersion betrug 7,4. Die Dispersion ist bei Raumtemperatur über längere Zeit stabil.

### Vergleichsbeispiel 2: Herstellung des Polyurethanharzes V2

Es wurde analog Beispiel 2 ein Polyurethanharz V2 hergestellt mit dem einzigen Unterschied, daß statt 10,9 g 2-Butyl-2-ethylpropandiol-1,3 nun 6,9 g Neopentylglykol eingesetzt wurden.
Das Polyurethanharz V2 weist eine Säurezahl von 21,5 mg KOH/g und eine Viskosität (10:3 in N-Methylpyrrolidon) von 15,0 dPa.s auf.

### Herstellung der pigmentfreien Mischung B1

Zu 33,2 Teilen der Polyurethanharzdispersion aus Beispiel 5 werden 43 Teile einer vorgequollen wäßrigen Paste, enthaltend 3 Gew.-% eines anorganischen Natrium-Magnesium-Schichtsilikat-Verdickungsmittels und 3 Gew.-% Polypropylenglykol mit einem zahlenmittleren Molekulargewicht von 900, wobei die Prozente auf das Gesamtgewicht der Paste bezogen sind, 19,8 Teile entionisiertes Wasser, 0,5 Teile eines handelsüblichen Entschäumers und 3,5 Teile einer 3,5%igen Lösung eines handelsüblichen Polyurethanverdickers in Wasser unter Rühren zugesetzt.

### Herstellung einer blaupigmentierten Basisfarbe A1

12 Teile Paliogenblau, 50 Teile der 60%igen, neutralisierten Polyurethanharzlösung 2, 23 Teile Butylglykol und 15 Teile iso-Butanol werden unter Rühren vermischt und mit einer Sandmühle dispergiert.

### Herstellung einer Aluminium enthaltenden Basisfarbe A2

27 Teile einer gemäß DE-OS 3 636 183 chromatierten Aluminiumbronze (Aluminiumgehalt 65 %, durchschnittlicher Teilchendurchmesser 15 µm) werden in 6,6 Teilen Butylglykol, 23,6 Teilen der 60%igen Polyurethanharzlösung 2 und 13,6 Teilen iso-Butanol durch 15-minütiges Rühren homogen verteilt und anschließend in 29,2 Teile der 60%igen, neutralisierten Polyurethanharzlösung 2 unter Rühren einfließen lassen. Diese Mischung wird weitere 30 Minuten mit einem Schnellrührer bei 1000 U/min. gerührt.

### Herstellung der Beschichtungszusammensetzungen I bis V

Aus der Polyurethanharzlösung 2 und der Polyurethanharzdispersion aus Beispiel 5 werden wäßrige Beschichtungszusammensetzungen hergestellt, indem die Basisfarbe A1 bzw. A2 direkt nach deren Herstellung in die Mischung B1 eingerührt wird.

Die Viskosität wird anschließend auf eine Auslaufzeit von ca. 25 sec. DIN-4-Becher (20°C) eingestellt.

**Tabelle:**

| Zusammensetzung der wäßrigen Basisbeschichtungszusammensetzungen I bis V in Teilen | | | | | |
|---|---|---|---|---|---|
| Beispiel | I | II | III | IV | V |
| A2 | 19,- | 14,25 | 12,7 | 9,5 | 6,3 |
| A1 | - | 4,25 | 5,7 | 8,5 | 11,3 |
| B1 | 81,- | 81,5 | 81,6 | 82,- | 82,4 |
| | 100,- | 100,- | 100,- | 100,- | 100,- |

Direkt im Anschluß nach der Herstellung der wäßrigen Basisbeschichtungszusammensetzungen werden sie nach gut bekannten Methoden auf mit einer handelsüblichen Elektrotauchlackierung und einem konventionellen (d.h. lösemittelhaltigen) oder wasserhaltigen Füller beschichtete phosphatierte Stahlbleche (Bonder 132) gespritzt, nach einer Ablüftzeit von 30 Minuten bei Raumtemperatur (bei einer relativen Luftfeuchtigkeit von 50 % und einer Raumtemperatur von 20°C) mit einem handelsüblichen konventionellen 2-Komponenten-Klarlack auf Basis eines hydroxylgruppenhaltigen Acrylatcopolymerisates und eines Isocyanatvernetzers überlackiert und 30 Minuten bei 60°C getrocknet. Die Trockenfilmschichtdicke der Basisbeschichtungszusammensetzung beträgt ≈ 15 µm, die des Klarlackes ≈ 50 µm.

Es werden Beschichtungen erzielt, die bezüglich des metallischen Effekts, der Haftung und der Wolkenfreiheit den in DE-A-41 10 520 beschriebenen Beschichtungen entsprechen.

## Patentansprüche

1. Wasserverdünnbares Polyurethanharz, erhältlich aus
a) mindestens einer Verbindung mit 2 Hydroxylgruppen,
b) ggf. mindestens einer, von der Verbindung (a) verschiedenen, Verbindung mit mindestens 1 und weniger als 3 Hydroxyl- und/oder Aminogruppen
c) mindestens einem Di- und/oder Polyisocyanat,
d) mindestens einer Verbindung, die zwei gegenüber Isocyanatgruppen reaktive Gruppen und mindestens eine zur Anionenbildung befähigte Gruppe aufweist, die vor oder nach dem Einbau der Komponente (d) in das Polyurethanmolekül neutralisiert wird, und
e) ggf. mindestens einer Verbindung mit mindestens 3 Hydroxyl- und/oder Aminogruppen,
dadurch gekennzeichnet, daß als Komponente (a)
a₁) mindestens ein Diol der Formel (I) 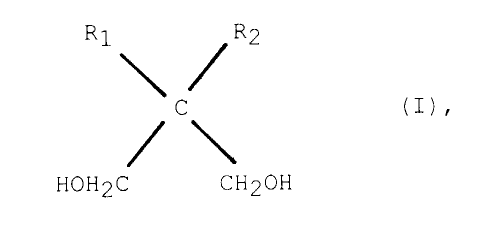 in der R₁ und R₂ jeweils einen gleichen oder verschiedenen Rest darstellen und für einen Alkylrest mit 1 bis 18 C-Atomen, einen Aryl- oder einen cycloaliphatischen Rest stehen, mit der Maßgabe, daß R₁ und/oder R₂ nicht Methyl sein darf, und/oder
a₂) mindestens ein Diol der Formel (II) 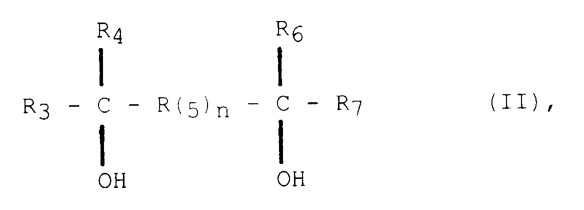 in der
R₃, R₄, R₆ und R₇ jeweils gleiche oder verschiedene Reste darstellen und R₃, R₄, R₆ und R₇ für einen Alkylrest mit 1 bis 6 C-Atomen, einen Cycloalkylrest oder einen Arylrest stehen und R₅ einen Alkylrest mit 1 bis 6 C-Atomen, einen Arylrest oder ungesättigten Alkylrest mit 1 bis 6 C-Atomen darstellt, und n entweder O oder 1 ist, eingesetzt worden ist.

2. Wasserverdünnbares Polyurethanharz nach Anspruch 1, dadurch gekennzeichnet, daß als Komponente (b) mindestens eine Verbindung mit mindestens 2 und weniger als 3 Hydroxyl- und/oder Aminogruppen eingesetzt worden ist und/oder daß zur Herstellung der Polyurethanharze zunächst aus den Komponenten (a), (b), (c) und (d) ein endständige Isocyanatgruppen aufweisendes Zwischenprodukt hergestellt worden ist, dessen freie Isocyanatgruppen ggf. anschließend zumindest teilweise mit der Komponente (e) umgesetzt worden sind.

3. Wasserverdünnbares Polyurethanharz nach Anspruch 1 oder 2, dadurch gekennzeichnet, daß als Komponente (a₁) 2-Butyl-2-ethylpropandiol-1,3, 2-Phenyl-2-methylpropandiol-1,3, 2-Propyl-2-ethylpropandiol-1,3, 2-Butyl-2-propylpropandiol-1,3, 1-Dihydroximethylbicyclo[2.2.1]heptan, 2,2-Diethylpropandiol-1,3, 2,2-Dipropylpropandiol-1,3 und/oder 2-Cyclo-hexyl-2,2-methylpropandiol-1,3 und/oder als Komponente (a₂) 2,5-Dimethyhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxipropyl)-benzol und/oder 1,3-(2'-Hydroxipropyl)-benzol eingesetzt worden ist.

4. Wasserverdünnbares Polyurethanharz nach einem der Ansprüche 1 bis 3, dadurch gekennzeichnet, daß die Komponente (b) zumindest teilweise aus einem Polyesterpolyol und/oder Polyetherpolyol mit einer Glasübergangstemperatur von mindestens - 40 °C besteht und/oder deren 60 %ige Lösung in Ethoxiethylpropionat eine Viskosität bei 23 °C von 1,5 bis 5,0 dPa.s aufweist.

5. Wasserverdünnbares Polyurethanharz nach Anspruch 4, dadurch gekennzeichnet, daß die Komponente (b) zumindest teilweise aus einem Polyesterpolyol und/oder Polyetherpolyol mit einer Glasübergangstemperatur von - 25 bis + 15 °C besteht und/oder deren 60 %ige Lösung in Ethoxiethylpropionat eine Viskosität bei 23 °C von 2,5 bis 4,0 dPa.s aufweist.

6. Wasserverdünnbares Polyurethanharz nach einem der Ansprüche 1 bis 5, dadurch gekennzeichnet, daß als Komponente (b) ein Polyester- und/oder Polyetherdiol mit einem zahlenmittleren Molekulargewicht von 400 bis 5000 und/oder als Komponente (c) ein Diisocyanat der Formel (III) 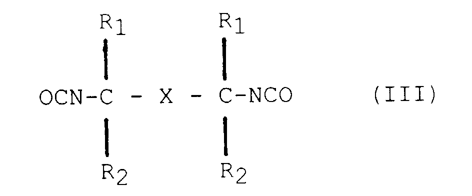 eingesetzt worden ist, wobei X für einen zweiwertigen, aromatischen Kohlenwasserstoffrest und R₁ und R₂ für einen Alkylrest mit 1 bis 4 C-Atomen stehen.

7. Wasserverdünnbares Polyurethanharz nach Anspruch 6, dadurch gekennzeichnet, daß als Komponente (c) ein Diisocyanat der Formel (III) eingesetzt worden ist, wobei X für einen ggf. halogen-, methyl- oder methoxi-substituierten Naphthylen-, Biphenylen- oder 1,2-, 1,3- oder 1,4-Phenylenrest und R₁ und R₂ für einen Alkylrest mit 1 bis 4 C-Atomen stehen.

8. Wasserverdünnbares Polyurethanharz nach einem der Ansprüche 1 bis 7, dadurch gekennzeichnet, daß als Komponente (a₁) 2-Butyl-2-ethylpropandiol-1,3 und/oder als Komponente (a₂) 2,5-Dimethylhexandiol-2,5 und/oder als Komponente (c) ein Diisocyanat der Formel (IV) 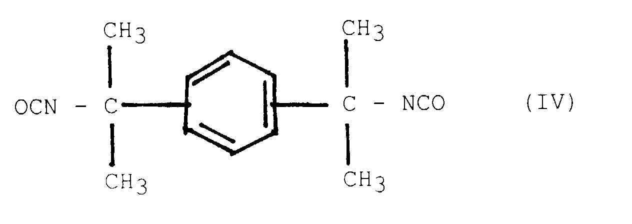 eingesetzt worden ist.

9. Wasserverdünnbares Polyurethanharz nach einem der Ansprüche 1 bis 8, dadurch gekennzeichnet, daß das Polyurethanharz erhältlich ist aus 0,5 bis 15 Gew.-% der Komponente (a₁) und/oder (a₂), wobei die Summe der Gew.-%-Angaben der Komponenten (a), (b), (d) und (e) jeweils 100 Gew.-% ergibt.

10. Wasserverdünnbares Polyurethanharz nach Anspruch 9, dadurch gekennzeichnet, daß das Polyurethanharz erhältlich ist aus 1 bis 7 Gew.-% der Komponente (a₁) und/oder (a₂), wobei die Summe der Gew.-%-Angaben der Komponenten (a), (b), (d) und (e) jeweils 100 Gew.-% ergibt.

11. Verfahren zur Herstellung von Polyurethanharzen, bei dem aus
a) mindestens einer Verbindung mit zwei Hydroxylgruppen,
b) ggf. mindestens einer, von der Verbindung (a) verschiedenen, Verbindung mit mindestens einer und weniger als 3 Hydroxyl- und/oder Aminogruppen,
c) mindestens einem Di- und/oder Polyisocyanat,
d) mindestens einer Verbindung, die zwei gegenüber Isocyanatgruppen reaktive Gruppen und mindestens eine zur Anionenbildung befähigte Gruppe aufweist, die vor oder nach dem Einbau der Komponente (d) in das Polyurethanmolekül neutralisiert wird, und
e) mindestens einer Verbindung mit mindestens 3 Hydroxyl- und/oder Aminogruppen,
ein Polyurethanharz hergestellt wird, dadurch gekennzeichnet, daß ein Polyurethanharz nach einem der Ansprüche 1 bis 10 hergestellt wird.

12. Überzugsmittel auf der Basis von Polyurethanharzen, dadurch gekennzeichnet, daß es ein Polyurethanharz nach einem der Ansprüche 1 bis 10 als Bindemittel enthält.

13. Verfahren zur Herstellung eines mehrschichtigen, schützenden und/oder dekorativen Überzuges auf einer Substratoberfläche, bei dem
1.) eine Basislackbeschichtungszusammensetzung aufgebracht wird,
2.)aus der in Stufe (1) aufgebrachten Zusammensetzung ein Polymerfilm auf der Oberfläche gebildet wird,
3.)auf der so erhaltenen Basisschicht ein transparenter Decklack aufgebracht wird und
4.)die Deckschicht zusammen mit der Basisschicht gehärtet wird,
dadurch gekennzeichnet, daß die in Stufe (1) aufgebrachte Basislackbeschichtungszusammensetzung und/oder der in Stufe (3) aufgebrachte Decklack ein Polyurethanharz nach einem der Ansprüche 1 bis 10 enthält.

14. Mit einem ggf. mehrschichtigen, schützenden und/oder dekorativen Überzug beschichtetes Substrat, dadurch gekennzeichnet, daß zumindest eine der Lackschichten ein Polyurethanharz nach einem der Ansprüche 1 bis 10 enthält.

15. Verwendung der Polyurethanharze nach einem der Ansprüche 1 bis 10 als Bindemittel in wasserverdünnbaren Überzugsmitteln.

16. Verwendung der Polyurethanharze nach einem der Ansprüche 1 bis 10 als Bindemittel in wasserverdünnbaren Überzugsmitteln für die Beschichtung von Automobilkarossen und/oder Kunststoffteilen und/oder als Bindemittel in wasserverdünnbaren Überzugsmitteln für die Reparaturlackierung.

## Claims

1. Water-dilutable polyurethane resin obtainable from
a) at least one compound having two hydroxyl groups,
b) if desired at least one compound which is different from the compound (a) and has at least 1 and less than 3 hydroxyl and/or amino groups,
c) at least one di- and/or polyisocyanate,
d) at least one compound which has two groups which are reactive towards isocyanate groups and at least one group capable of forming anions, which group is neutralized before or after the incorporation of component (d) into the polyurethane molecule, and
e) if desired at least one compound having at least 3 hydroxyl and/or amino groups,
characterized in that the component (a) which has been employed comprises
a₁) at least one diol of the formula (I) 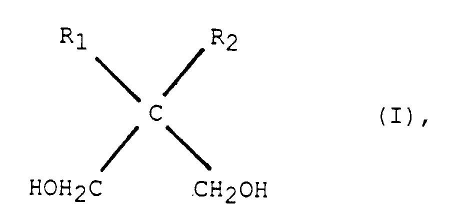 in which R₁ and R₂ are each an identical or different radical and are an alkyl radical having 1 to 18 carbon atoms, an aryl radical or a cycloaliphatic radical, with the proviso that R₁ and/or R₂ may not be methyl, and/or
a₂) at least one diol of the formula (II) 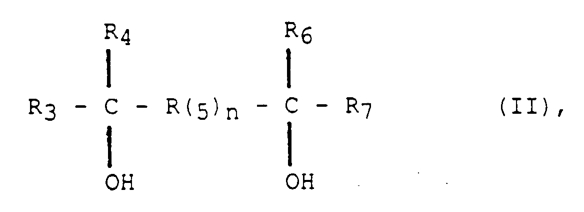 in which R₃, R₄, R₆ and R₇ are each identical or different radicals and R₃, R₄, R₆ and R₇ are an alkyl radical having 1 to 6 carbon atoms, a cycloalkyl radical or an aryl radical, and R₅ is an alkyl radical having 1 to 6 carbon atoms, an aryl radical or an unsaturated alkyl radical having 1 to 6 carbon atoms, and n is either O or 1.

2. Water-dilutable polyurethane resin according to Claim 1, characterized in that the component (b) which has been employed comprises at least one compound having at least 2 and less than 3 hydroxyl and/or amino groups and/or in that, to prepare the polyurethane resins, components (a), (b), (c) and (d) have initially been used to prepare an intermediate which contains terminal isocyanate groups and at least some of whose free isocyanate groups have been reacted subsequently if desired with the component (e).

3. Water-dilutable polyurethane resin according to Claim 1 or 2, characterized in that the component (a₁) which has been employed comprises 2-butyl-2-ethyl-1,3-propanediol, 2-phenyl-2-methyl-1,3-propanediol, 2-propyl-2-ethyl-1,3-propanediol, 2-butyl-2-propyl-1,3-propanediol, 1-dihydroxymethylbicyclo[2.2.1]- heptane, 2,2-diethyl-1,3-propanediol, 2,2-dipropyl-1,3-propanediol and/or 2-cyclohexyl-2,2-methyl-1,3-propanediol, and/or the component (a₂) which has been employed comprises 2,5-dimethy-2,5-hexanediol [sic], 2,5-diethyl-2,5-hexanediol, 2-ethyl-5-methyl-2,5-hexanediol, 2,4-dimethyl-2,4-pentanediol, 2,3-dimethyl-2,3-butanediol, 1,4-(2'-hydroxypropyl)benzene and/or 1,3-(2'-hydroxypropyl)benzene.

4. Water-dilutable polyurethane resin according to one of Claims 1 to 3, characterized in that component (b) consists at least in part of a polyesterpolyol and/or polyetherpolyol having a glass transition temperature of at least -40°C and/or the 60% strength solution thereof in ethoxyethyl propionate has a viscosity at 23°C of from 1.5 to 5.0 dPa.s.

5. Water-dilutable polyurethane resin according to Claim 4, characterized in that component (b) consists at least in part of a polyesterpolyol and/or polyetherpolyol having a glass transition temperature of from -25 to +15°C and/or the 60% strength solution thereof in ethoxyethyl propionate has a viscosity at 23°C of from 2.5 to 4.0 dPa.s.

6. Water-dilutable polyurethane resin according to one of Claims 1 to 5, characterized in that the component (b) which has been employed is a polyester- and/or polyether-diol having a number-average molecular weight of from 400 to 5,000, and/or the component (c) which has been employed is a diisocyanate of the formula (III) 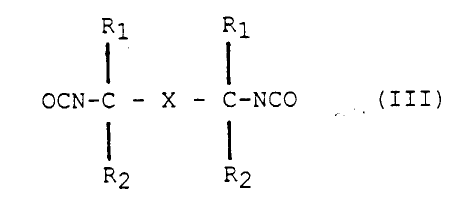 in which X is a divalent, aromatic hydrocarbon radical and R₁ and R₂ are an alkyl radical having 1 to 4 carbon atoms.

7. Water-dilutable polyurethane resin according to Claim 6, characterized in that the component (c) which has been employed is a diisocyanate of the formula (III) in which X is an optionally halogen, methyl or methoxy-substituted naphthylene, biphenylene or 1,2-, 1,3- or 1,4-phenylene radical and R₁ and R₂ are an alkyl radical having 1 to 4 carbon atoms.

8. Water-dilutable polyurethane resin according to one of Claims 1 to 7, characterized in that the component (a₁) which has been employed is 2-butyl-2-ethyl-1,3-propanediol, and/or the component (a₂) which has been employed is 2,5-dimethyl-2,5-hexanediol, and/or the component (c) which has been employed is a diisocyanate of the formula (IV)

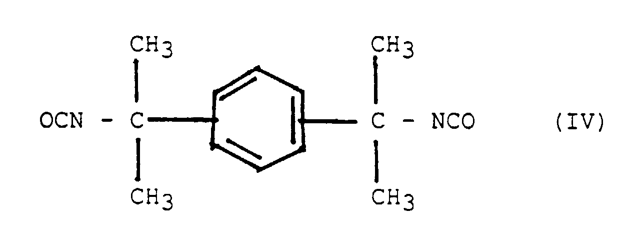

9. Water-dilutable polyurethane resin according to one of Claims 1 to 8, characterized in that the polyurethane resin is obtainable from 0.5 to 15% by weight of the component (a₁) and/or (a₂), the sum of the percentages by weight of components (a), (b), (d) and (e) being in each case 100% by weight.

10. Water-dilutable polyurethane resin according to Claim 9, characterized in that the polyurethane resin is obtainable from 1 to 7% by weight of the component (a₁) and/or (a₂), the sum of the percentages by weight of components (a), (b), (d) and (e) being in each case 100% by weight.

11. Process for the preparation of polyurethane resins, in which a polyurethane resin is prepared from
a) at least one compound having two hydroxyl groups,
b) if desired at least one compound which is different from the compound (a) and has at least one and less than three hydroxyl and/or amino groups,
c) at least one di- and/or polyisocyanate,
d) at least one compound which has two groups which are reactive towards isocyanate groups and at least one group capable of forming anions, which group is neutralized before or after the incorporation of component (d) into the polyurethane molecule, and
e) at least one compound having at least 3 hydroxyl and/or amino groups,
characterized in that a polyurethane resin according to one of Claims 1 to 10 is prepared.

12. Coating composition based on polyurethane resins, characterized in that it contains as binder a polyurethane resin according to one of Claims 1 to 10.

13. Process for the preparation of a multilayer protective and/or decorative coating on a substrate surface, in which
1.) a basecoating composition is applied,
2.) a polymer film is formed on the surface from the composition applied in step (1),
3.) a transparent topcoat is applied to the basecoat obtained in this way, and
4.) the topcoat is cured together with the basecoat,
characterized in that the basecoating composition applied in step (1) and/or the topcoat applied in step (3) contains a polyurethane resin according to one of Claims 1 to 10.

14. Substrate coated with a single-layer or multilayer protective and/or decorative coating, characterized in that at least one of the layers of the coating contains a polyurethane resin according to one of Claims 1 to 10.

15. Use of the polyurethane resins according to one of Claims 1 to 10 as binders in water-dilutable coating compositions.

16. Use of the polyurethane resins according to one of Claims 1 to 10 as binders in water-dilutable coating compositions for the coating of motor-car bodies and/or plastics components and/or as binders in water-dilutable coating compositions for repair coating.

## Revendications

1. Résine de polyuréthanne diluable dans l'eau pouvant être obtenue à partir de
a) au moins un composé ayant 2 groupes hydroxyle,
b) éventuellement au moins un composé différent du composé (a) et ayant au moins un et moins de 3 groupes hydroxyle et/ou amino,
c) au moins un di- et/ou polyisocyanate,
d) au moins un composé ayant deux groupes réactifs vis-à-vis des groupes isocyanate et au moins un groupe capable de former des anions, qui est neutralisé avant ou après l'incorporation du composant (d) dans la molécule de polyuréthanne, et
e) éventuellement au moins un composé ayant au moins 3 groupes hydroxyle et/ou amino,
caractérisée en ce que l'on a utilisé, en tant que composant (a),
a₁) au moins un diol de formula (I) 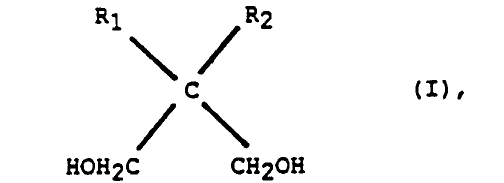 dans laquelle
R₁ et R₂ représentent chacun un radical identique ou différent et désignent un radical alkyle ayant de 1 à 18 atomes de carbone, un radical aryle ou un radical cycloaliphatique, à condition que R₁ et/ou R₂ ne soient pas un méthyle, et/ou
a₂) au moins un diol de formule (II) 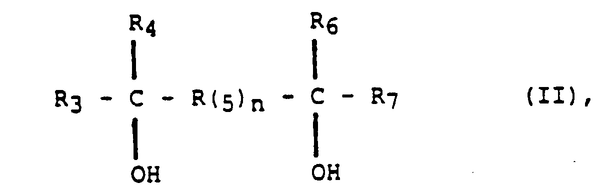 dans laquelle
R₃, R₄, R₆ et R₇ représentent chacun des radicaux identiques ou différents et R₃, R₄, R₆ et R₇ désignent un radical alkyle ayant de 1 à 6 atomes de carbone, un radical cycloalkyle ou un radical aryle et R₅ représente un radical alkyle ayant de 1 à 6 atomes de carbone, un radical aryle ou un radical alkyle insaturé ayant de 1 à 6 atomes de carbone, et n vaut soit 0 soit 1.

2. Résine de polyuréthanne diluable dans l'eau selon la revendication 1, caractérisée en ce que l'on a utilisé, en tant que composant (b), au moins un composant ayant au moins 2 et moins de 3 groupes hydroxyle et/ou amino et/ou en ce que, en vue de la préparation des résines de polyuréthanne, l'on a d'abord préparé à partir des composants (a), (b), (c) et (d), un produit intermédiaire présentant des groupes isocyanate terminaux, dont les groupes isocyanate libres ont été mis ensuite éventuellement à réagir, au moins en partie, avec le composant (e).

3. Résine de polyuréthanne diluable dans l'eau selon la revendication 1, caractérisée en ce que l'on a utilisé, en tant que composant (a₁), le 2-butyl-2-éthyl-1,3-propanediol, le 2-phényl-2-méthyl-1,3-propanediol, le 2-propyl-2-éthyl-1,3-propanediol, le 2-butyl-2-propyl-1,3-propanediol, le 1-dihydroxyméthylbicyclo [2.2.1]-heptane, le 2,2-diéthyl-1,3-propanediol, le 2,2-dipropyl-1,3-propanediol et/ou le 2-cyclohexyl-2,2-méthyl-1,3-propanediol et/ou en tant que composant (a₂), le 2,5-diméthyl-2,5-hexanediol, le 2,5-diéthyl-2,5-hexanediol, le 2-éthyl-5-méthyl-2,5-hexanediol, le 2,4-diméthyl-2,4-pentanediol, le 2,3-diméthyl-2,3-butanediol, le 1,4-(2'-hydroxypropyl)benzène et/ou le 1,3-(2'-hydroxypropyl)benzène.

4. Résine de polyuréthanne diluable dans l'eau selon l'une quelconque des revendications 1 à 3, caractérisée en ce que le composant (b) est constitué au moins en partie d'un polyesterpolyol et/ou d'un polyétherpolyol ayant une température de transition vitreuse d'au moins -40°C, et/ou leur solution à 60% dans le propionate d'éthoxyéthyle présente une viscosité de 1,5 à 5,0 dPa.s à 23°C.

5. Résine de polyuréthanne diluable dans l'eau selon la revendication 4, caractérisée en ce que le composant (b) est constitué au moins en partie d'un polyesterpolyol et/ou polyétherpolyol ayant une température de transition vitreuse de -25 à +15°C et/ou leur solution à 60% dans le propionate d'éthoxyéthyle présente une viscosité de 2,5 à 4,0 dPa.s à 23°C.

6. Résine de polyuréthanne diluable dans l'eau selon l'une quelconque des revendications 1 à 5, caractérisée en ce que l'on a utilisé, en tant que composant (b), un polyester- et/ou polyétherdiol ayant un poids moléculaire moyen en nombre de 400 à 5 000 et/ou, en tant que composant (c), un diisocyanate de formule (III) 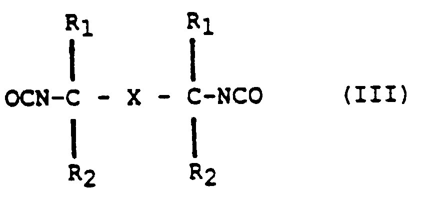 dans laquelle X désigne un radical hydrocarboné aromatique divalent, et R₁ et R₂ désignent un radical alkyle ayant de 1 à 4 atomes de carbone.

7. Résine de polyuréthanne diluable dans l'eau selon la revendication 6, caractérisée en ce que l'on a utilisé, en tant que composant (c), un diisocyanate de formule (III), dans laquelle X désigne un radical naphtylène, biphénylène ou 1,2-, 1,3- ou 1,4-phénylène éventuellement halogène-, méthyl- ou méthoxy- substitué, et R₁ et R₂ désignent un radical alkyle ayant de 1 à 4 atomes de carbone.

8. Résine de polyuréthanne diluable dans l'eau selon l'une quelconque des revendications 1 à 7, caractérisée en ce que l'on a utilisé, en tant que composant (a₁), le 2-butyl-2-éthyl-1,3-propanediol et/ou, en tant que composant (a₂), le 2,5-diméthyl-2,5-hexanediol et/ou, en tant que composant (c), un diisocyanate de formule (IV)

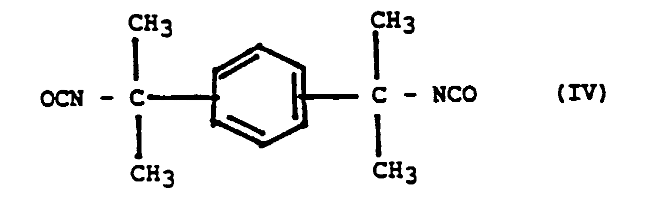

9. Résine de polyuréthanne diluable dans l'eau selon l'une quelconque des revendications 1 à 8, caractérisée en ce que la résine de polyuréthanne peut être obtenue à partir de 0,5 à 15% en poids du composant (a₁) et/ou (a₂), la somme des pourcentages en poids des composants (a), (b), (d) et (e) étant à chaque fois de 100% en poids.

10. Résine de polyuréthanne diluable dans l'eau selon la revendication 9, caractérisée en ce que la résine de polyuréthanne peut être obtenue à partir de 1 à 7% en poids du composant (a₁) et/ou (a₂), la somme des pourcentages en poids des composants (a), (b), (d) et (e) étant à chaque fois de 100% en poids.

11. Procédé de préparation de résines de polyuréthanne, dans lequel une résine de polyuréthanne est préparée à partir de
a) au moins un composé ayant deux groupes hydroxyle,
b) éventuellement au moins un composé différent du composé (a) et ayant au moins un et moins de 3 groupes hydroxyle et/ou amino,
c) au moins un di- et/ou polyisocyanate,
d) au moins un composé ayant deux groupes réactifs vis-à-vis des groupes isocyanate et au moins un groupe capable de former des anions, qui peut être neutralisé avant ou après l'incorporation du composant (d) dans la molécule de polyuréthanne, et
e) au moins un composé ayant au moins 3 groupes hydroxyle et/ou amino,
caractérisé en ce que l'on prépare une résine de polyuréthanne selon l'une quelconque des revendications 1 à 10.

12. Agent de revêtement à base de résines de polyuréthanne, caractérisé en ce qu'il contient, en tant que liant, une résine de polyuréthanne selon l'une quelconque des revendications 1 à 10.

13. Procédé de préparation d'un revêtement protecteur et/ou décoratif multicouche sur une surface de substrat, dans lequel
1.) on applique une composition de revêtement pour couche de fond,
2.) on forme un film polymère sur la surface à partir de la composition appliquée à l'étape (1)
3.) on applique une couche de finition transparente sur la couche de fond ainsi obtenue, et
4.) on durcit la couche de finition conjointement avec la couche de fond,
caractérisé en ce que la composition de revêtement pour couche de fond appliquée à l'étape (1) et/ou la couche de finition à l'étape (3) contien(nen)t une résine de polyuréthanne selon l'une quelconque des revendications 1 à 10.

14. Substrat revêtu d'un revêtement protecteur et/ou décoratif éventuellement multicouche, caractérisé en ce qu'au moins l'une des couches contient une résine de polyuréthanne selon l'une quelconque des revendications 1 à 10.

15. Utilisation des résines de polyuréthanne selon l'une quelconque des revendications 1 à 10, en tant que liants, dans des agents de revêtement diluables dans l'eau.

16. Utilisation des résines de polyuréthanne selon l'une quelconque des revendications 1 à 10, en tant que liants, dans des agents de revêtement diluables dans l'eau pour le revêtement de carrosseries automobiles et/ou de pièces en plastique et/ou en tant que liants dans des agents de revêtement diluables dans l'eau pour les retouches.
